# EUROPEAN PATENT APPLICATION

(11) **EP 0 856 254 A1**
(43) Date of publication of application: **05.08.1998**
(21) Application number: 97440014.5
(22) Date of filing: 03.02.1997
(51) Int. Cl.: A01L 7/02

(54) **Gripping device for a horseshoe**

(71) Applicant: Watson, Curtis G., Howell, Michigan 48843 (US); Mannarino, Andrew G., Howell, Michigan 48843 (US)
(72) Inventor: Watson, Curtis G., Howell, Michigan 48843 (US); Mannarino, Andrew G., Howell, Michigan 48843 (US)
(74) Representative: Arbousse-Bastide, Jean-Claude Philippe

(57) **Abstract**

The present invention is directed to an improved gripping device (25) for horses' hooves. The novel device, in general, prevents the horse's hoof from winging in or paddling out in order that the hoof travels in a straight line, and, in addition, spreads shock evenly upon striking the contacting surface and taking pressure off the wall of the hoof. The gripping device (25) has a flat top surface (23) which faces towards a horse's hoof and a bottom surface (28) opposite the top surface, the bottom surface having a raised portion (27) for improved gripping, the device being positioned centrally with respect to the horse's hoof.

## Description

### FIELD OF THE INVENTION

This invention relates to a gripping device for a horseshoe. In particular, the invention relates to a gripping device for a horseshoe to provide improved grip to the surface on which the horse's hoof contacts. More specifically, the novel gripping device is, in general, designed to prevent the horse's hoof from winging in or paddling out in order that the hoof travels in a straight line, and to spread shock evenly taking the pressure off the wall of the hoof.

### BACKGROUND OF THE INVENTION

Horseshoes come in a variety of size and shapes depending on the type of horse and the activity for which the horse is to be engaged. Generally, horseshoes are U-shaped and conform to the circumference of the hoof with two branches emanating from the toe area and projecting beyond the heel. Some of the early horseshoes were made out of iron and were forged to fit the varying sizes and shapes of the horses' hooves. A shoe is then nailed onto each hoof. Every three to five weeks due to the growth of the horse hoof, the shoe is removed and the foot trimmed. The shoe can be reused or reset each time until it is worn out at which time it is replaced with a new shoe. Although, iron or metal horseshoes offer protection to the horse's foot, they offer little or no absorption of shock and concussion when the horse moves, especially when carrying a rider. Furthermore, metal horseshoes wear smooth and provide little traction on many surfaces.

In recent years, horseshoes of various plastics and elastomers have been tried. Although, they increase the absorption of shock and concussion, they failed to offer proper protection to the horse's hoof because of their lack of stiffness, shapeability, and durability. Typically, the better the particular material performed as a shock absorber, the worse its wear characteristics. Further, these shoes have typically worn smooth and as a result traction or grip is lost.

There have been attempts to incorporate horseshoe pads as an integral part of the metal horseshoe. Generally, these are plastic or leather pads, which are attached to the top part of the horseshoe. While, having the pad between the horse's hoof and the metal horseshoe provided some absorption of the shock and concussion forces, in general, such a pad would weaken the overall stability of the shoe.

It is, therefore, desirable to have a horseshoe with a gripping device which improves the grip between a horse's hoof and the contacting surface while at the same time functioning to prevent the horse's hoof from sliding on the contacting surface, to prevent the horse's hoof from winging in or padding out in order that the hoof travels in a straight line, and spreading shock evenly taking the pressure off the wall of the hoof.

### SUMMARY OF THE INVENTION

In accordance with the present invention, there is provided a gripping device for horses which improves the grip between a horse's hoof and the contacting surface.

Further in accordance with present invention, an improved gripping device for horses' hooves is provided which, in general, prevents the horse's hoof from winging in or paddling out in order that the hoof travels in a straight line, and spreads shock evenly upon striking the contacting surface and taking pressure off the wall of the hoof.

Still further, in accordance with the present invention, there is provided a gripping device for a horseshoe which keeps the shoe from spreading and keeps the horse's heels from contracting.

Still further in accordance with the present invention, there is provided a gripping device for use in conjunction with or as an integral part of a horseshoe for improving the grip between a horse's hoof and the contacting surface, the device having a flat top surface which faces towards a horse's hoof and a bottom surface opposite the top surface, the bottom surface having a raised portion for improved gripping, the device being positioned centrally with respect to the horse's hoof.

Still further in accordance with the present invention, there is provided a gripping device for use in conjunction with or an integral part of a horseshoe for improving the grip between a horse's hoof and the contacting surface, the device having various specially designed shapes.

These and other aspects of the present invention will become clear to those skilled in the art from the reading and understanding of the specification.

### BRIEF DESCRIPTION OF THE DRAWINGS

The invention will be further described in connection with the attached drawing figures showing preferred embodiments of the invention including specific parts and arrangements of parts. It is intended that the drawings included as a part of this specification be illustrative of the preferred embodiment of the invention and should in no way be considered as a limitation on the scope of the invention.

FIG. 1 is a bottom view of the gripping device in accordance with the present invention.

FIG. 2 is a side view of the gripping device according to the present invention.

FIG. 3 is a bottom view of a horseshoe showing one embodiment of a gripping device according to the present invention.

FIG. 4 is a bottom view of a horseshoe showing a second embodiment of a gripping device according to the present invention.

FIG. 5 is a bottom view of a horseshoe showing a third embodiment of a gripping device according to the present invention.

FIG. 6 is a bottom view of a horseshoe showing a fourth embodiment of a gripping device according to the present invention.

FIG. 7 is a bottom view of a horseshoe showing a fifth embodiment of a gripping device according to the present invention.

FIG. 8 is a bottom view of a horseshoe showing a sixth embodiment of a gripping device according to the present invention.

### DETAILED DESCRIPTION OF THE INVENTION

This invention is directed to a gripping device for a horseshoe for improving the grip between a horse's hoof and the conducting surface, resulting in better traction for the horse. The gripping device of the present invention further prevents the hoof from winging in or paddling out in order that the hoof travels in a straight line, and, in addition, spreads shock evenly taking the pressure off the wall of the hoof. The gripping device also keeps the horseshoe from spreading and keeps the horse's heels from contracting. The gripping device will be described by referring to the drawings.

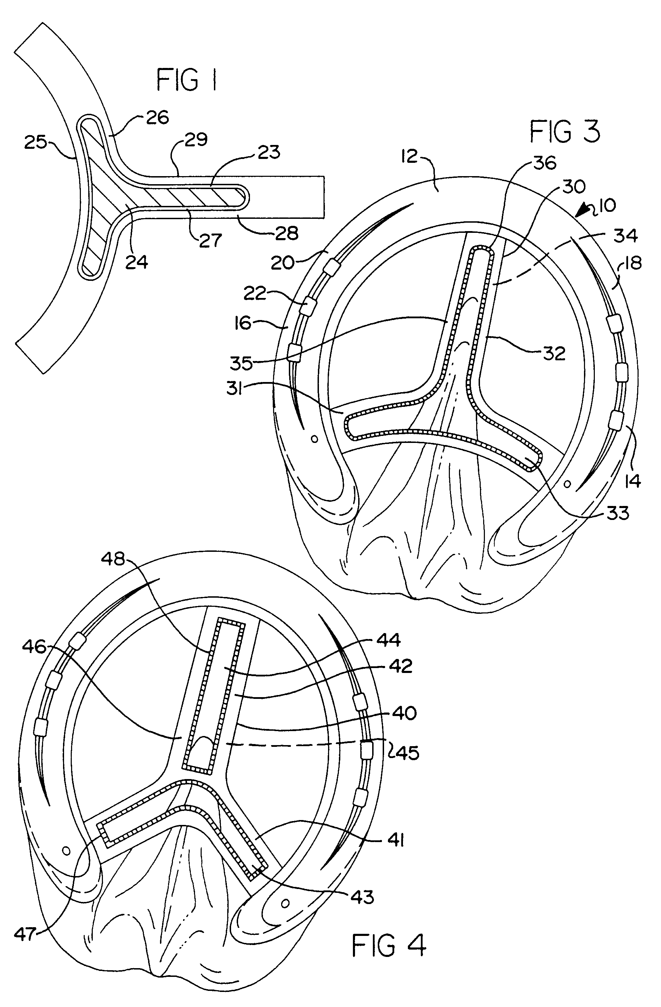

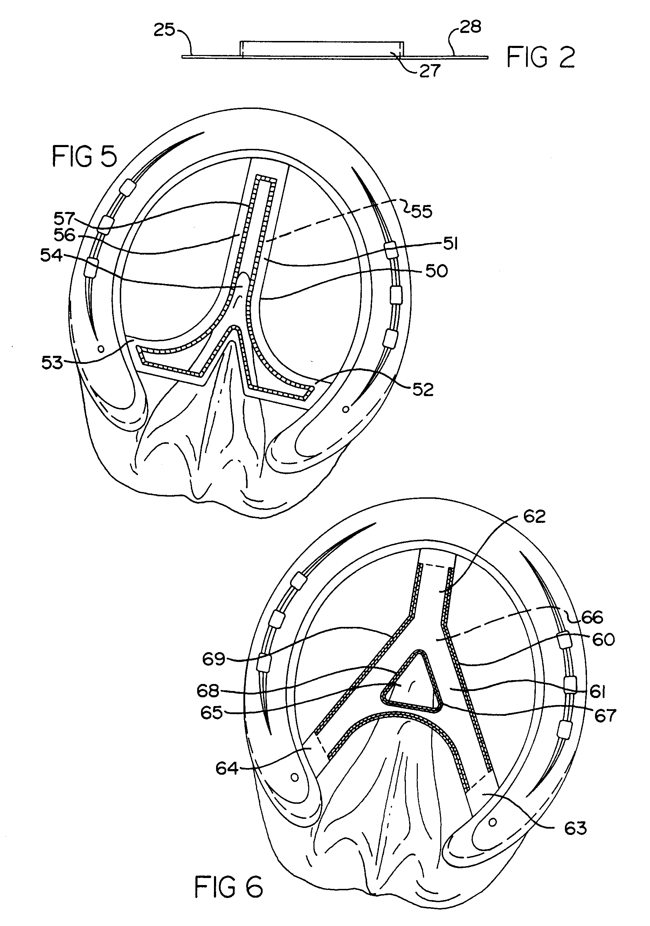

The gripping device is generally shown in FIGS. 1 and 2. The gripping device shown in FIG. 1 and generally designated as **25** comprises a flat top surface **23** that faces towards the horse's hoof and a bottom surface **28** opposite the top surface, the bottom surface has a raised portion **27** which provides the gripping surface when contacting the ground or surface on which the horse is being ridden. The gripping device **25** further comprises a central arcuate portion **26** extending to a generally rectangular shape portion **29**, the generally rectangular portion being attached near the center of the arcuate portion and positioned perpendicular to the arcuate portion. The gripping device **25** further has an opening **24** having a curved portion and a rectangular portion, the curved portion being located in the arcuate portion **26** of the device and a rectangular portion extending into the rectangular portion **29** of the device **25,** wherein the opening **24** generally has a T-shape. The raised portion **27** surrounds and forms the border of the T-shaped opening. The gripping device **25** is designed such that it is positioned centrally with respect to the horse's hoof and may be attached to the horse's hoof by any suitable means. FIG. 2 showing a side view of gripping device **25**, shows the raised section **27** extending from the bottom surface **28**.

FIGS. 3-8 show the gripping device according to the present invention in combination with a horseshoe. The horseshoe **10** is a generally U-shaped article having a central arcuate toe portion **12**, an arcuate right leg portion **14**, and an arcuate left leg portion **16**. The shoe **10** has a ground facing, substantially planar side **18** and a top hoof wall or sole facing side **20** with a plurality of nail apertures **22** for attaching the shoe **10** to the wall of the hoof. The horseshoe may be made of any material suitable for horseshoes, such as steel, aluminum, plastic, or composite materials thereof. The plastic may be any number of durable engineering plastics having good wear and strength properties, e.g., polyesters, polyimides, polycarbonates, polyaramides, nylons, various polymer alloys of these materials and the like. The composite material may be polymer/metal alloys and/or composites and the like.

As shown in FIGS. 3-8, the gripping device of the present invention has a flat top surface which faces towards the horse's hoof and a bottom surface opposite the top surface. The bottom surface has a raised portion for improved gripping. The gripping device is positioned between the horse's hoof and the horseshoe. The gripping device is attached by any suitable means to the horse's hoof. Such suitable means for attaching the gripping device include nailing the gripping device to the hoof or horseshoe, using tabs to attach the gripping device to the horseshoe, using other forms of fasteners, and the like.

In one embodiment of the present invention, the horseshoe may further include a wedge shaped pad having a wedge shaped frog insert which is integrally-formed with or securely attached to the pad not shown in the figures. The frog insert may function to support the coffin bone of the horse's hoof when the hoof is under load. Besides, supporting the coffin bone, the insert also provides support for the rest of the subsolar surface. It also provides stimulation of the vascular system and hence is an aid to blood circulation. When the horseshoe includes a frog insert, the gripping device lays atop the frog insert pressing on the frog with every step helping to stimulate blood circulation.

The gripping device of the present invention may be made from any suitable material such as steel, aluminum, other metals, plastic, or composite materials. Such as those previously discussed. The gripping device may be used in a various types of horseshoes. For example, the gripping device may be used with keg or cowboy shoes, such as plain horseshoes, heeled horseshoes with heel calks, or heeled and toed horseshoes with heel and toe calks. The gripping device may further be used with pony and mule shoes such as plain mule shoes, heeled mule shoes, plain pony shoes, plain shoes, or block heels toed shoes. The gripping device may also be used with aluminum racing plates for hind feet. Examples of these types of horseshoes include right sticker or mud calk shoes, left sticker or mud calk shoes, block heel shoes, plain heel shoes, left block and sticker shoes, right block and sticker shoes, level grip or outside rim shoes, and queens plate shoes. Moreover, the gripping device may be a separate unit or the device may be made an integral part of shoe, e.g., by molding or casting the shoe and the gripping device in the same mold. Alternatively, the gripping device may be made separately and be formed from a different material than the material of the shoe.

One embodiment of the present invention is shown in FIG. 3. The gripping device **30** comprises a central arcuate portion **31** and a rectangular shaped portion **32**, the rectangular portion being attached near the center of the arcuate portion and positioned perpendicular to the arcuate portion The gripping device has an opening **33** having a curved portion and a rectangular portion, the curved portion being located in the arcuate portion **31** of the device and the rectangular portion extending into the rectangular portion **32** of the device, and the opening having a general T-shape. The gripping device further has a flat top surface **34** which faces towards a horse's hoof and a bottom surface **35** opposite the top surface, the bottom surface having a raised portion **36** which surrounds the T-shaped opening. The gripping device is positioned centrally with respect to the horse's hoof and attached to the horse's hoof by any suitable means.

In a second embodiment of the present invention of FIG. 4, the gripping device **40** comprises a central arcuate portion **41** and a rectangular shaped portion **42**, the rectangular portion being attached near the center of the arcuate portion and positioned perpendicular to the arcuate portion. The gripping device has an arcuate shaped opening **43** located in the arcuate portion **41** of the device and a rectangular shaped opening **44** located in the rectangular portion **42** of the device. The gripping device further has a flat top surface **45** which faces towards a horse's hoof and a bottom surface **46** opposite the top surface, the bottom surface having a raised portion **47** surrounding the arcuate shaped opening **43** and a raised portion **48** surrounding the rectangular shaped opening **44**. The gripping device is positioned centrally with respect to the horse's hoof and attached to the horse's hoof by any suitable means.

In another embodiment of the present invention as shown in FIG. 5, the gripping **50** device comprises a rectangular shaped portion **51** and two adjoining leg portions **52**, **53** which extend in opposite directions from the rectangular portion and are perpendicular to the rectangular portion, the device having a general Y-shape. The gripping device has an opening **54** in the device, the opening having a straight portion and two adjoining leg portions extending in opposite directions from the straight portion, the straight portion being located in the rectangular portion **51** of the device and the leg portions extending into the leg portions **52**, **53** of the device, and the opening having a general Y-shape. The gripping device further has a flat top surface **55** which faces towards a horse's hoof and a bottom surface **56** opposite the top surface, the bottom surface having a raised portion **57** which surrounds the Y-shaped opening **54**. The gripping device is positioned centrally with respect to the horse's hoof and attached to the horse's hoof by any suitable means.

In another embodiment of the present invention as shown in FIG. 6, the gripping device **60** has a central triangular portion **61** and three rectangular portions **62**, **63**, **64** extending from the three ends of the triangular portion. The gripping device further has a triangular shaped opening **65** located in the triangular portion **61**. The gripping device further has a flat top surface **66** which faces towards a horse's hoof and a bottom surface **67** opposite the top surface, the bottom surface having a raised portion **68** around the perimeter of the device and a raised portion **69** which surrounds the triangular shaped opening **65**. The gripping device is attached to the horseshoe on the side facing the horse's hoof by any suitable means.

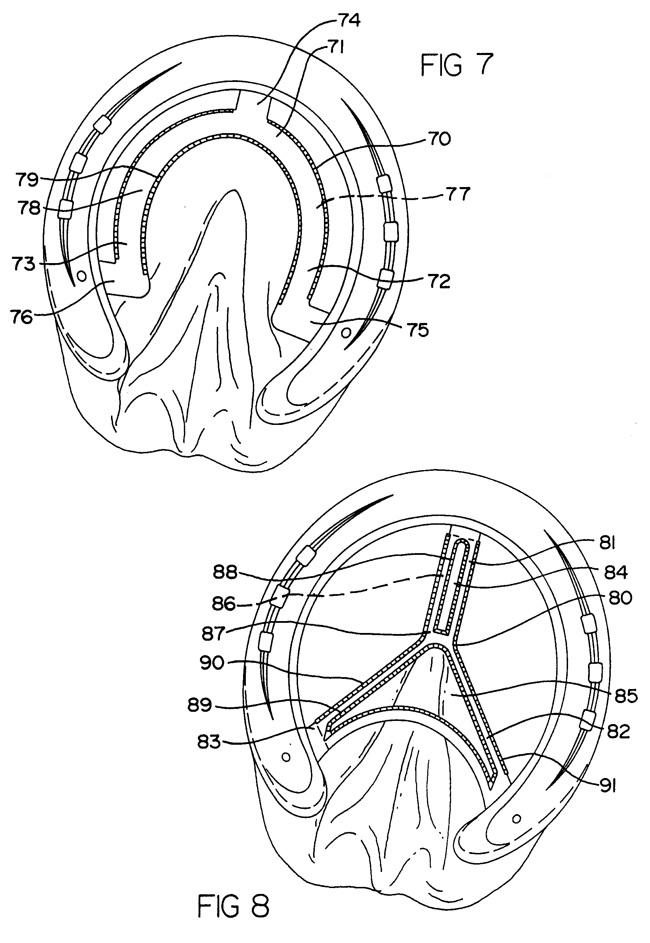

In another embodiment of the present invention as shown in FIG. 7, the gripping device **70** has a central arcuate portion **71**, an arcuate right leg portion **72**, an arcuate left leg portion **73**, and three rectangular portions **74**, **75**, **76**, one rectangular portion **74** located at the center of the central arcuate portion **71** extending in a direction opposite the leg portions, and the other rectangular portions **75**, **76** located at the ends of the leg portions perpendicular to the leg portions and extending in a direction opposite the opposite leg portion. The gripping device has a flat top surface **77** which faces towards a horse's hoof and a bottom surface **78** opposite the top surface, the bottom surface having a raised portion **79**. The raised portion has a central arcuate portion, an arcuate right leg portion, and an arcuate left leg portion. The gripping device is positioned centrally with respect to the horse's hoof and attached to the horse's hoof by any suitable means.

In another embodiment of the present invention as shown in FIG. 8, the gripping device **80** comprises a rectangular shaped portion **81** having two long sides and two shorter sides, and two adjoining leg portions **82**, **83** which extend in opposite directions from the rectangular portion **81** and are perpendicular to the rectangular portion, the device having a general Y-shape. The gripping device has a rectangular shaped opening **84** located in the rectangular portion **81** of the device and a triangular shaped opening **85** located in the leg portions **82**, **83** of the device. The gripping device further has a flat top surface **86** which faces towards a horse's hoof and a bottom surface **87** opposite the top surface, the bottom surface having a raised portion **88** surrounding the rectangular shaped opening **84**, a raised portion **89** surrounding the triangular shaped opening **85**, and raised portions **90**, **91** along the long sides of the rectangular portion and extending onto the adjoining leg portions. The gripping device is positioned centrally with respect to the horse's hoof and attached to the horse's hoof by any suitable means.

The gripping device of the present invention improves the traction between the horse's hoof and the ground. The gripping device also prevents the horse's hoof from sliding on the contacting surface. The gripping device further prevents the horse's hoof from winging in or paddling out causing the horse to travel in a straight line. The design of the gripping device spreads the shock evenly and takes pressure off the wall of the horse's hoof. In addition, the gripping device prevents the horseshoe from spreading and keeps the horse's heel from contracting. Further, the gripping device is safe to use because no portion of the device extends to the bottom of the horseshoe.

Although various exemplary embodiments of the invention have been disclosed for illustrative purposes, it is understood that variations and modifications can be made by one skilled in the art without departing from the spirit or scope of the invention.

## Claims

1. A gripping device for use in conjunction with a horseshoe for improving the traction between a horse's hoof and the contacting surface, said device having a flat top surface which faces towards a horse's hoof and a bottom surface opposite the top surface, said bottom surface having a raised portion for improved gripping, said device being positioned centrally with respect to the horse's hoof and attached to the horse's hoof.

2. The gripping device of claim 1, said device comprising:
a central arcuate portion and a straight rectangular shaped portion, said straight portion being attached near the center of the arcuate portion and positioned perpendicular to the arcuate portion;
an opening in the device, said opening having a curved portion and a rectangular portion, said curved portion being located in the arcuate portion of the device and the rectangular portion extending into the straight portion of the device, said opening having a general T-shape; and
a flat top surface which faces towards a horse's hoof and a bottom surface opposite the top surface, said bottom surface having a raised portion which surrounds the T-shaped opening, said device being positioned centrally with respect to the horse's hoof and attached to the horse's hoof.

3. The gripping device of claim 1, said device comprising:
a central arcuate portion and a rectangular shaped portion, said rectangular portion being attached near the center of the arcuate portion and positioned perpendicular to the arcuate portion;
an arcuate shaped opening located in the arcuate portion of the device;
a rectangular shaped opening located in the rectangular portion of the device; and
a flat top surface which faces towards a horse's hoof and a bottom surface opposite the top surface, said bottom surface having a raised portion surrounding the arcuate shaped opening and a raised portion surrounding the rectangular shaped opening, said device being positioned centrally with respect to the horse's hoof and attached to the horse's hoof.

4. The gripping device of claim 1, said device comprising:
a rectangular shaped portion and two adjoining leg portions which extend in opposite directions from the rectangular portion and are perpendicular to the rectangular portion, said device having a general Y-shape;
an opening in the device, said opening having a straight portion and two adjoining leg portions extending in opposite directions from the straight portions, said straight portion being located in the rectangular portion of the device and the leg portions extending into the leg portions of the device, said opening having a general Y-shape; and
a flat top surface which faces towards a horse's hoof and a bottom surface opposite the top surface, said bottom surface having a raised portion which surrounds the Y-shaped opening, said device being positioned centrally with respect to the horse's hoof and attached to the horse's hoof.

5. The gripping device of claim 1, said device comprising:
a central triangular portion and three rectangular portions extending from the three ends of the triangular portion;
a triangular shaped opening located in the triangular portion; and
a flat top surface which faces towards a horse's hoof and a bottom surface opposite the top surface, said bottom surface having a raised portion around the perimeter of said device and a raised portion which surrounds the triangular shaped opening, said device being positioned centrally with respect to the horse's hoof and attached to the horse's hoof.

6. The gripping device of claim 1, said device comprising:
a central arcuate portion, an arcuate right leg portion, an arcuate left leg portion, and three rectangular portions, one rectangular portion located at the center of the central arcuate portion extending in a direction opposite the leg portions, and the other rectangular portions located at the ends of the leg portions perpendicular to the leg portions and extending in a direction opposite the opposite leg portion; and
a flat top surface which faces towards a horse's hoof and a bottom surface opposite the top surface, said bottom surface having a raised portion, said raised portion having a central arcuate portion, an arcuate right leg portion, and an arcuate left leg portion, said device being positioned centrally with respect to the horse's hoof and attached to the horse's hoof

7. The gripping device of claim 1, said device comprising:
a rectangular shaped portion having two long sides and two shorter sides, and two adjoining leg portions which extend in opposite directions from the rectangular portion and are perpendicular to the rectangular portion, said device having a general Y-shape;
a rectangular shaped opening located in the rectangular portion of the device;
a triangular shaped opening located in the leg portions of the device; and
a top surface which faces towards a horse's hoof and a bottom surface opposite the top surface, said bottom surface having a raised portion surrounding the rectangular shaped opening, a raised portion surrounding the triangular shaped opening, and raised portions along the long sides of the rectangular portion and extending onto the adjoining leg portions, said device being positioned centrally with respect to the horse's hoof and attached to the horse's hoof.

8. The gripping device of claim 1 wherein said device is made from steel, aluminum, plastic or a composite material.

9. A horseshoe having improved traction comprising a gripping device integrally incorporated in said horseshoe, wherein said horseshoe is generally V-shaped having a central arcuate toe portions, an arcuate right leg portion, and an arcuate left leg portion, said horseshoe further having two major substantially planar surfaces, and said gripping device having a flat top surface which faces towards a horse's hoof and a bottom surface opposite the top surface, said bottom surface having a raised portion for improved gripping, said device being positioned centrally with respect to the horse's hoof and attached to the horse's hoof.

10. The horseshoe of claim 9 wherein said gripping device comprises a central arcuate portion and a straight rectangular shaped portion, said straight portion being attached near the center of the arcuate portion and positioned perpendicular to the arcuate portion;
an opening in the device, said opening having a curved portion and a rectangular portion, said curved portion being located in the arcuate portion of the device and the rectangular portion extending into the straight portion of the device, said opening having a general T-shape; and
a flat top surface which faces towards a horse's hoof and a bottom surface opposite the top surface, said bottom surface having a raised portion which surrounds the T-shaped opening, said device being positioned centrally with respect to the horse's hoof and attached to the horse's hoof.

11. The horseshoe of claim 9 wherein said gripping device comprises a central arcuate portion and a rectangular shaped portion, said rectangular portion being attached near the center of the arcuate portion and positioned perpendicular to the arcuate portion;
an arcuate shaped opening located in the arcuate portion of the device;
a rectangular shaped opening located in the rectangular portion of the device; and
a flat top surface which faces towards a horse's hoof and a bottom surface opposite the top surface, said bottom surface having a raised portion surrounding the arcuate shaped opening and a raised portion surrounding the rectangular shaped opening, said device being positioned centrally with respect to the horse's hoof and attached to the horse's hoof.

12. The horseshoe of claim 9 wherein said gripping device comprises a rectangular shaped portion and two adjoining leg portions which extend in opposite directions from the rectangular portion and are perpendicular to the rectangular portion, said device having a general Y-shape;
an opening in the device, said opening having a straight portion and two adjoining leg portions extending in opposite directions from the straight portions, said straight portion being located in the rectangular portion of the device and the leg portions extending into the leg portions of the device, said opening having a general Y-shape; and
a flat top surface which faces towards a horse's hoof and a bottom surface opposite the top surface, said bottom surface having a raised portion which surrounds the Y-shaped opening, said device being positioned centrally with respect to the horse's hoof and attached to the horse's hoof.

13. The horseshoe of claim 9 wherein said gripping device comprises a central triangular portion and three rectangular portions extending from the three ends of the triangular portion;
a triangular shaped opening located in the triangular portion; and
a flat top surface which faces towards a horse's hoof and a bottom surface opposite the top surface, said bottom surface having a raised portion around the perimeter of said device and a raised portion which surrounds the triangular shaped opening, said device being positioned centrally with respect to the horse's hoof and attached to the horse's hoof.

14. The horseshoe of claim 9 wherein said gripping device comprises a central arcuate portion, an arcuate right leg portion, an arcuate left leg portion, and three rectangular portions, one rectangular portion located at the center of the central arcuate portion extending in a direction opposite the leg portions, and the other rectangular portions located at the ends of the leg portions perpendicular to the leg portions and extending in a direction opposite the opposite leg portion; and
a flat top surface which faces towards a horse's hoof and a bottom surface opposite the top surface, said bottom surface having a raised portion, said raised portion having a central arcuate portion, an arcuate right leg portion, and an arcuate left leg portion, said device being positioned centrally with respect to the horse's hoof and attached to the horse's hoof.

15. The horseshoe of claim 9 wherein said gripping device comprises a rectangular shaped portion having two long sides and two shorter sides, and two adjoining leg portions which extend in opposite directions from the rectangular portion and are perpendicular to the rectangular portion, said device having a general Y-shape;
a rectangular shaped opening located in the rectangular portion of the device;
a triangular shaped opening located in the leg portions of the device; and
a top surface which faces towards a horse's hoof and a bottom surface opposite the top surface, said bottom surface having a raised portion surrounding the rectangular shaped opening, a raised portion surrounding the triangular shaped opening, and raised portions along the long sides of the rectangular portion and extending onto the adjoining leg portions, said device being positioned centrally with respect to the horse's hoof and attached to the horse's hoof.
